# EUROPEAN PATENT APPLICATION

(11) **EP 4 074 412 A1**
(43) Date of publication of application: **19.10.2022**
(21) Application number: 21168116.8
(22) Date of filing: 13.04.2021
(51) Int. Cl.: B01J 7/02, C01B 3/02

(54) **DEVICE FOR CONTROLLED PRODUCTION OF A GAS FROM TWO FLUID REAGENTS DEPOSITED ON A SURFACE**

(71) Applicant: Hysilabs, SAS, 13100 Aix-en-Provence (FR)
(72) Inventor: MASSE DE LA HUERTA, César Arturo, 05280 Cuajimalpa de Morelos (MX); NATT, Alexandre, 68220 Hésingue (FR); LOME, Vincent, 13002 Marseille (FR)
(74) Representative: de Jong, Jean Jacques

(57) **Abstract**

A device for controlled production of a gas from first and second liquid reagents that, when mixed, produce the gas and a non-gaseous byproduct, comprises a reactor surface (14); a liquid spreading device (10, 12) configured to spread the first and second reagents on a common area (16) of the reactor surface; and a scraper (20) configured to separate the byproduct from the reactor surface.

## Description

### Technical Field

The present invention relates to hydrogen carrier compounds, and more specifically to collecting the production of hydrogen from a liquid hydrogen carrier. The production system may be applied more generally to any gas generated by mixing liquid reagents leaving a solid byproduct.

### Background

Hydrogen carrier compounds can convey large amounts of hydrogen in solid or liquid form, which facilitates the transport of hydrogen. Such hydrogen carriers may be of the family of silylated derivatives, more specifically of hydrogen-polysiloxanes, having the general formula (HRSiO)n. In order to extract the hydrogen, the hydrogen carrier compound is mixed with a so-called proton source, often water, in the presence of catalysts - see for instance patent applications WO2010094785 and WO2011098614. After the hydrogen is produced, a byproduct remains that needs to be removed from the system and eventually recycled.

A difficulty resides in extracting the hydrogen continuously from such components while removing the byproducts, especially when the byproducts are solid. Patent application WO2012151582 discloses a hydrogen generation system based on solid hydrogen carriers, capable of removing solid byproducts.

### Summary

A device is generally provided for controlled production of a gas from first and second liquid reagents that, when mixed, produce the gas and a non-gaseous byproduct, the device comprising a reactor surface; a liquid spreading device configured to spread the first and second reagents on a common area of the reactor surface; and a scraper configured to separate the byproduct from the reactor surface.

The spreading device may include respective nozzles configured to spray the reagents on the common area.

The spreading device may be configured to spread the first and second reagents while moving over the surface, and the scraper may be configured to follow the spreading device at a distance sufficient to let the reagents react.

A leading edge of the scraper may contact the reactor surface with an angle of at most 90 degrees between the scraper and the reactor surface.

The device may further comprise a byproduct collection area, wherein the scraper and the reactor surface are oriented such that the separated byproduct falls into the collection area.

The reactor surface may have a revolution axis, and the spreading device and scraper may be attached to a rotating shaft centered on the revolution axis.

The scraper may lag the spreading device by an angle of at least 270 degrees.

The first reagent may be a liquid hydrogen carrier and the second reagent may be a liquid proton source, whereby the produced gas is hydrogen.

The hydrogen carrier may be a liquid silylated derivative.

The hydrogen carrier may be a liquid dihydrogen-polysiloxane, producing a byproduct essentially comprised of silicate.

A method may also be provided for a controlled production of a gas from first and second liquid reagents that, when mixed, produce the gas and a non-gaseous byproduct, the method comprising the steps of spreading the first and second reagents on a common area of a reactor surface; and scraping the reactor surface to evacuate byproduct left on the reactor surface.

The spreading step may include spraying the reagents on the common area.

The spreading and scraping steps may be performed in a synchronous manner over the reactor surface.

The reactor surface may have a revolution axis, and the spreading and scraping may be performed in a rotating motion around the revolution axis.

The scraping may lag the spreading by an angle of at least 270 degrees.

### Brief Description of the Drawings

Embodiments will be exposed in the following description provided for exemplary purposes only, in relation to the appended drawings, in which:
Figures 1A to 1C respectively illustrate three phases of a principle of operation of a device for producing gas from two liquid reagents.
Figures 2A to 2C respectively illustrate three operation phases of a practical embodiment of a device for producing gas from two liquid reagents.
Figure 3 illustrates a perspective view of the device in operation in the phase of figure 2C.

### Detailed Description

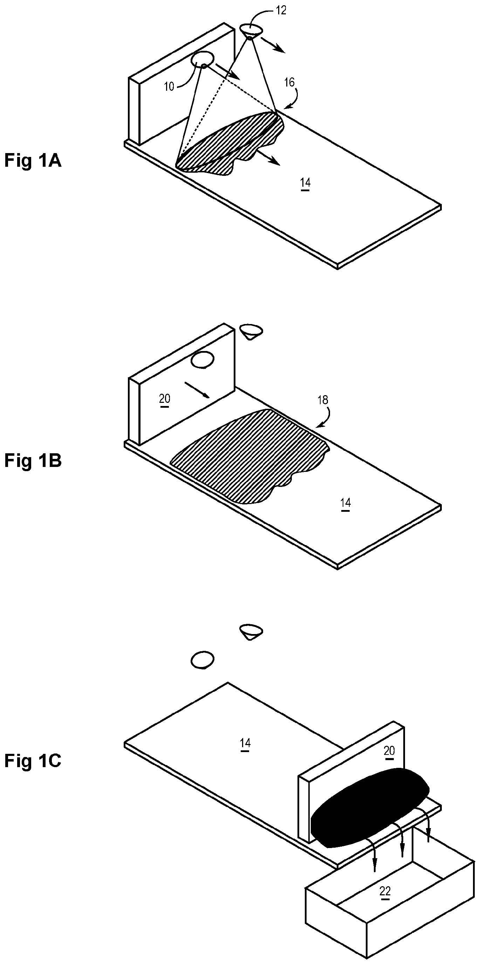

Figures 1A-1C are diagrams that illustrate a principle of operation of embodiments of a device for producing hydrogen from the reaction of two reagents that are both provided in liquid form. A byproduct removal mechanism is illustrated that can be configured for processing a solid byproduct in a continuous hydrogen production cycle.

In figure 1A, the two liquid reagents, for instance a hydrogen carrier and a proton source are sprayed by respective nozzles 10, 12 on a reactor surface 14. Since the two reagents should be mixed together to the best possible extent, the nozzles are preferably oriented such that the two reagents are sprayed on a common area 16 of the reactor surface, which may be obtained by tilting the nozzles towards each other, as shown.

With such a configuration, the spraying cones intersect, as shown by dotted lines, and mixing of the reagents starts before they reach the surface. To increase efficiency, the intersection volume of the spraying cones is made as large as possible, which may be obtained by fixing the nozzles as close as possible to each other.

In addition, the nozzles 10, 12 are configured to move together along the reactor surface 14 as they spray the reagents, as shown by arrows, thus depositing a uniform film of liquid reagents on the surface. The speed of motion and the flow rates of the nozzles are adjusted as a function of the reaction time and the desired gas production rate.

In figure 1B, the nozzles have swept a certain extent of the reactor surface, depositing a film of reagents. The deposited reagents have reacted leaving a solid byproduct 18.

A scraper 20 is then set in motion from behind the position of the nozzles, as illustrated by an arrow. The scraper is configured to sweep the whole extent of the reactor surface where the reagents were deposited and evacuate the remaining solid byproduct.

In figure 1C, the scraper 20 reaches the opposite end of the reactor surface. The solid byproducts are pushed over the edge of the surface and fall into a temporary storage area, such as a collection tray 22 placed below the edge of the reactor surface.

After this phase, the scraper and nozzles are returned to the position of figure 1A to start a new cycle.

The reactor surface 14 may be made in any material withstanding the reaction temperature and mechanical stress. Preferably the material does not adhere to the byproduct and allows easy removal of the byproduct. The surface may further be coated with a catalyst promoting the reaction.

The device of figures 1A-1C has been shown to illustrate a principle of operation. It does not as such allow a continuous production of gas, because it requires a reset phase to start a new production cycle.

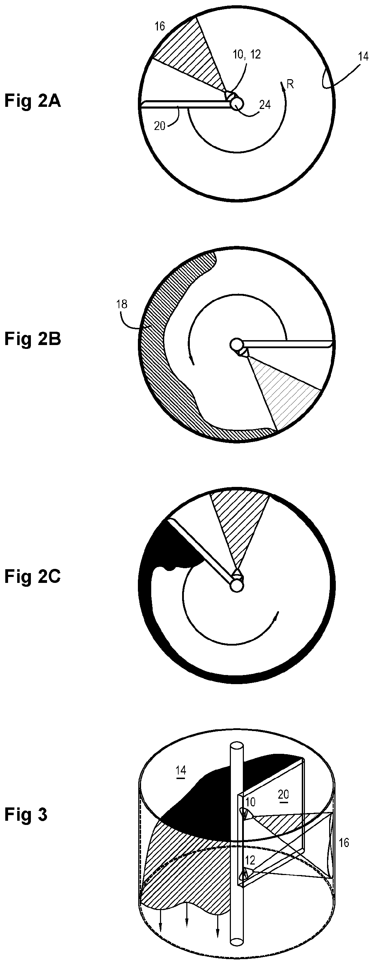

Figures 2A-2C illustrate three operation phases of a practical embodiment of a device that continuously produces gas from two liquid reagents, using the principle illustrated in figures 1A-1C.

In figure 2A, the reactor surface 14 is in the form of a revolution surface, such as a cylinder. A shaft 24 is configured to rotate about the revolution axis of the cylinder 14, and bears the nozzles 10, 12 and the scraper 20. In other words, the nozzles and the scraper all rotate synchronously, for instance anti-clockwise on figures 2A-2C, as illustrated by an arrow R.

The nozzles 10, 12 are aligned axially on the shaft 24 and oriented to spray the liquid reagents radially on a common target area 16 of the internal cylinder surface 14. The scraper 20 is configured to sweep the internal cylinder surface as the shaft rotates and has a height in contact with the cylinder surface preferably greater than that of the common target spraying area.

In order to increase the reaction time for a given rotation speed, the scraper 20 is mounted on the shaft such that it starts operating as late as possible after the initial spraying. Ideally the scraper operates with a rotation lag of 360 degrees after the nozzles, which would mean that the scraper is aligned with the nozzles on the shaft. This is not feasible in practice. As shown as a practical example, the scraper 20 is mounted on the shaft such that it leads the nozzles by approximately 45 degrees in the direction of rotation, leaving some clearance for the spraying cones. Such a configuration corresponds to a scraping operation lag of approximately 315 degrees. Satisfactory results may be obtained within a range of lag angles, for instance between 270 and 360 degrees.

As shown, the leading edge of the scraper contacts the cylinder surface with an angle of approximately 90 degrees. The leading edge preferably has a penetrating profile, i.e. having an angle between the scraper and the cleaned surface no larger than 90 degrees, so that the scraper, preferably made of a compliant material, maintains a scraping effect as opposed to a laminating effect. The trailing edge of the scraper may be tapered, as shown.

In figure 2A, an initial phase is shown, where the cylinder 14 is clean and the nozzles 10,12 only just start spraying the reagents, and no byproduct has formed.

In figure 2B, the nozzles and scraper have rotated by 180 degrees. The nozzles have deposited a uniform layer of reagents on half the cylinder. The deposited reagents start reacting, leaving a solid byproduct layer 18 that normally grows thicker with time. The scraper 20 has not yet started operating.

In figure 2C, the scraper 20 reaches the point where the nozzles started spraying in figure 1A. Here the scraper reaches the first byproduct formation and starts removing it.

Figure 3 illustrates a perspective view of the device in operation in the phase of figure 2C. Various constructional details of the elements are better visible. As mentioned before, the nozzles 10, 12 are tilted towards each other so that they both spray a same common area 16 of the cylinder, and that their spraying cones intersect. The scraper 20 may have a generally parallelepipedal shape.

The cylinder 14 is preferably vertical, so that the detached byproduct falls by gravity into a lower portion of the cylinder serving as a storage area. The scraper may be configured so that its contact edge with the cylinder surface is tilted to exert a downwards push on the deposited byproduct.

The bottom of the cylinder may be equipped with an airtight drawer system for regularly removing the excess byproduct during a gas production cycle. Once the drawer is full, it contains little or no gas, whereby its removal will cause very little gas leakage. Alternatively, the bottom of the cylinder may be sufficiently large for storing all of the byproduct of a production cycle.

Such a system achieves production of gas from liquid reagents in a continuous mode. The gas production rate of the system increases with the flow rates of the nozzles. With an increasing flow rate, the rotation speed of the system should be increased, but the rotation speed is capped by the reaction time of the reagents, whereby the diameter and height of the cylinder may be increased.

As previously mentioned, the hydrogen carrier reagent may be of the family of hydrogen-methyl-polysiloxanes, having the general formula (HRSiO)ₙ, which are available in liquid form. The proton source reagent may simply be water, among other possibilities. The resulting byproduct is however difficult to recycle.

A preferred hydrogen carrier would be of the family of dihydrogen-polysiloxanes, having the general formula (H₂SiO)ₙ, because their byproduct essentially corresponds to silicate, which can be readily recycled back into a hydrogen carrier. Such a compound also reacts with water as a proton source, among other possibilities.

Dihydrogen-polysiloxanes have only been found in solid form and have been difficult to produce industrially. However, patent application EP18305549 discloses a method for producing dihydrogen-polysiloxanes industrially in liquid form, which makes them particularly well suited for use in the present system.

The system disclosed herein is applicable to the production of gas from any liquid reagents that leave a solid byproduct. Although the device has been specifically designed to process solid byproducts, it may also be used to process a liquid byproduct in a very similar manner.

The spraying nozzles 10, 12 have been disclosed as a preferred embodiment for spreading the liquid reagents on the reactor surface. More generally, the liquid spreading may be achieved by alternative techniques such as a blade that spreads the liquids, or a brush equipped with a liquid dispenser, or a dome-shaped liquid deflector to create a falling liquid layer.

## Claims

1. A device for controlled production of a gas from first and second liquid reagents that, when mixed, produce the gas and a non-gaseous byproduct, the device comprising:
• a reactor surface (14);
• a liquid spreading device (10, 12) configured to spread the first and second reagents on a common area (16) of the reactor surface; and
• a scraper (20) configured to separate the byproduct from the reactor surface.

2. The device of claim 1, wherein the spreading device includes respective nozzles (10, 12) configured to spray the reagents on the common area.

3. The device of claim 1, wherein the spreading device is configured to spread the first and second reagents while moving over the surface, and the scraper is configured to follow the spreading device at a distance sufficient to let the reagents react.

4. The device of claim 1, wherein a leading edge of the scraper (20) contacts the reactor surface (14) with an angle of at most 90 degrees between the scraper and the reactor surface.

5. The device of claim 1, comprising a byproduct collection area (22), wherein the scraper (20) and the reactor surface (14) are oriented such that the separated byproduct falls into the collection area.

6. The device of claim 3, wherein the reactor surface (14) has a revolution axis, and the spreading device and scraper are attached to a rotating shaft (24) centered on the revolution axis.

7. The device of claim 6, wherein the scraper lags the spreading device by an angle of at least 270 degrees.

8. The device of claim 1, wherein the first reagent is a liquid hydrogen carrier and the second reagent is a liquid proton source, whereby the produced gas is hydrogen.

9. The device of claim 8, wherein the hydrogen carrier is a liquid silylated derivative.

10. The device of claim 8, wherein the hydrogen carrier is a liquid dihydrogen-polysiloxane, producing a byproduct essentially comprised of silicate.

11. A method for controlled production of a gas from first and second liquid reagents that, when mixed, produce the gas and a non-gaseous byproduct, the method comprising the following steps:
• spreading (10, 12) the first and second reagents on a common area (16) of a reactor surface (14); and
• scraping (20) the reactor surface to evacuate byproduct left on the reactor surface.

12. The method of claim 11, wherein the spreading step includes spraying the reagents on the common area.

13. The method of claim 11, wherein the spreading and scraping steps are performed in a synchronous manner over the reactor surface.

14. The method of claim 11, wherein the reactor surface has a revolution axis, and the spreading and scraping are performed in a rotating motion around the revolution axis.

15. The method of claim 13, wherein the scraping lags the spreading by an angle of at least 270 degrees.
